# EUROPÄISCHE PATENTSCHRIFT

(11) **EP 2 212 365 B1**
(45) Veröffentlichungstag und Bekanntmachung des Hinweises auf die Patenterteilung: **06.03.2019**
(21) Anmeldenummer: 08804662.8
(22) Anmeldetag: 24.09.2008
(51) Int. Cl.: C08G 18/10, C08G 18/48, C08G 18/75, C09J 175/08

(54) **FEUCHTIGKEITSHÄRTENDE ZUSAMMENSETZUNG UMFASSEND MINDESTENS ZWEI SILANGRUPPEN-AUFWEISENDE POLYMERE**
MOISTURE CURABLE COMPOSITIONS HAVING IMPROVED DEVELOPMENT OF ADHESION
COMPOSITIONS DURCISSANT À L'HUMIDITÉ AYANT UN DÉVELOPPEMENT D'ADHÉRENCE AMÉLIORÉ

(30) Priorität: 21.11.2007 EP 07121209
(43) Veröffentlichungstag der Anmeldung: 04.08.2010
(73) Patentinhaber: Sika Technology AG, 6340 Baar (CH)
(72) Erfinder: OERTLI, Marcel, CH-8049 Zürich (CH); JUCKER, Barbara, CH-8057 Zürich (CH)
(74) Vertreter: Sika Patent Attorneys
(86) Internationale Anmeldenummer: PCT/EP2008/062755
(87) Internationale Veröffentlichungsnummer: WO 2009/065654

(56) Entgegenhaltungen:
- EP-A1- 2 055 753
- WO-A-2006/130592
- WO-A-2007/085622
- US-A1- 2007 088 137

## Beschreibung

### Technisches Gebiet

Die vorliegende Erfindung betrifft das Gebiet der feuchtigkeitshärtenden Zusammensetzungen, insbesondere das Gebiet der feuchtigkeitshärtenden silanfunktionellen Polymere.

### Stand der Technik

Feuchtigkeitshärtende Zusammensetzungen auf der Basis von silanfunktionellen Polymeren sind bekannt und werden unter anderem als elastische Klebstoffe, Dichtstoffe und Beschichtungen eingesetzt. Sie sind frei von Isocyanatgruppen und stellen deshalb eine aus toxikologischer Sicht bevorzugte Alternative zu den Isocyanat-haltigen Polyurethansystemen dar.

WO 03/018658 A1 beschreibt silanfunktionelle Polymere mit α-funktionellen Silangruppen als Endgruppen, welche sich durch eine hohe Reaktivität und damit schnellere Aushärtung auszeichnen. Auch WO 2007/085620 A1 beschreibt die Verwendung von silanfunktionellen Polymeren mit α-funktionellen Silangruppen als Endgruppen, in Klebstoffen und Dichtstoffen, welche verbesserte Haftung aufweisen. Derartige Systeme weisen jedoch eine grosse Tendenz zum Kriechen auf.

US 3,971,751 und US 6,207,766 beschreiben silanterminierte Polyetherpolymere, welche in feuchtigkeitshärtenden Zusammensetzungen zum Einsatz kommen können. Derartige Systeme weisen jedoch einerseits eine sehr langsame Aushärtung und zuweilen unter Umständen eine Tendenz zum Kriechen auf. US 2006/0128919 A1 offenbart, dass das Kriechen derartiger silanterminierten Polyetherpolymere durch den Zusatz von Silikaten oder Zinnkatalysatoren verbessert werden kann. Zinnkatalysatoren sind jedoch vielfach aus ökologischen und arbeitssicherheitstechnischen Gründen unerwünscht.

Beispielsweise US 5,364,955 offenbart Zusammensetzungen, welche silanterminierte Polyurethanpolymere enthalten. Derartige Systeme weisen jedoch einen sehr langsamen Haftungsaufbau auf.

WO 2007/085622 A1 offenbart in einem Beispiel einen Klebstoff, welcher neben einem Polymeren mit α-funktionellen Silangruppen eine äusserst geringe Menge an Acrylat-Polymer mit Silangruppen enthält. Diese Systeme neigen jedoch zum Kriechen. US 2007/0088137 offenbart sprühbare Klebstoffe, welche ein Phenolharz als Tackifier und ein Polymer mit hydrolysierbaren Siliziumendgruppen enthalten. In dessen Beispielen werden sprühbare Klebstoffe, welche neben einem Phenolharz als Tackifier noch einen Dimethoxy(methyl)silylmethylcarbamat terminierten Polyether sowie noch allenfalls weitere Silanterminierte Polymere enthalten.

WO 2006/130592 A1 offenbart einen Polyurethandichtstoff, welcher im Wesentlichen aus einem Isocyanat-terminierten Polyurethanprepolymer besteht und lediglich geringe Menge an einem Polymeren mit α-funktionellen Silangruppe und einer noch geringeren Menge an einem Silan-terminierten Polyurethanpolymer enthält. Derartige Dichtstoffe weisen jedoch grosse Mengen an Isocyanatgruppen auf und sind deshalb vom toxikologischen Standpunkt her nachteilhaft.

### Darstellung der Erfindung

Aufgabe der vorliegenden Erfindung ist es daher, feuchtigkeitshärtende Zusammensetzungen zur Verfügung zu stellen, welche eine schnelle Härtung, ein geringes Kriechen und einen schnellen Haftungsaufbau aufweisen.

Überraschenderweise wurde gefunden, dass diese Aufgabe durch eine Zusammensetzung gemäss Anspruch 1 gelöst werden kann.

Es hat sich nämlich gezeigt, dass hierfür in der Zusammensetzung neben einem ersten Typ von Polymer **(SP1)** mit einer spezifischen Endgruppe (Formel (I)) noch mindestens ein zweiter Typ von Polymer **(SP2** und/oder **SP3)** mit einer anderen spezifischen Endgruppe (Formel (II) und/oder (III)) vorhanden sein muss. Diese Zusammensetzungen eignen sich bestens als Klebstoff und/oder Dichtstoff, welche einen schnellen Haftungsaufbau, ein geringes Kriechen sowie eine schnelle Aushärtung aufweisen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt eine feuchtigkeitshärtende Zusammensetzung, welche
mindestens ein Polymer **SP1** mit Endgruppen der Formel (I) 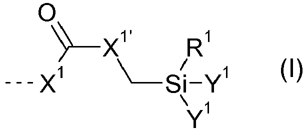 sowie entweder
mindestens ein Polymer **SP2** mit Endgruppen der Formel (II) und gegebenenfalls mindestens ein Polymer **SP3** mit den Endgruppen der Formel (III), welches frei von Harnstoffgruppen oder Urethangruppen ist;
   oder
mindestens ein Polymer **SP3** mit Endgruppen der Formel (III), welches frei von Harnstoffgruppen oder Urethangruppen ist; 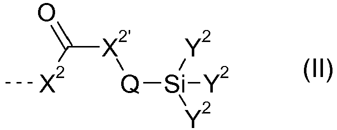 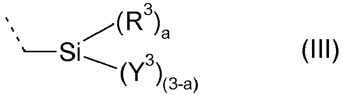
umfasst.

Hierbei stehen X¹, X¹, X² und X^{2'} jeweils unabhängig voneinander für O, S oder NR⁵.

Q steht für einen linearen oder verzweigten Alkylenresten mit 3 bis 6 C-Atomen.

R⁵ steht hierbei für ein Wasserstoffatom oder für einen linearen oder verzweigten Kohlenwasserstoffrest mit 1 bis 20 C-Atomen, welcher gegebenenfalls cyclische Anteile aufweist, und welcher gegebenenfalls mindestens eine funktionelle Gruppe aufweist, welche ausgewählt ist aus der Gruppe bestehend aus Alkoxysilyl, Ether, Sulfon, Nitril, Nitro, Carbonsäureester, Sulfonsäureester und Phosphonsäureester.

Weiterhin stehen R¹ und R³ jeweils unabhängig voneinander für eine Alkylgruppe mit 1 bis 10 C-Atomen, bevorzugt für eine Methylgruppe.

Y¹, Y² und Y³ stehen jeweils unabhängig voneinander für einen hydrolysierbaren Rest, insbesondere für eine Alkoxygruppe mit 1 bis 3 C-Atomen,
und a steht für 0 oder 1.
Es gilt weiterhin die Massgabe, dass
entweder
das Gewichtsverhältnis von Polymer **SP1** zu Polymer **SP2** einen Wert zwischen 0.35 und 0.8, beträgt
   oder
das Gewichtsverhältnis von Polymer **SP1** zu Polymer **SP3** einen Wert zwischen 0.1 und 0.8, insbesondere zwischen 0.2 und 0.8, beträgt;
sowie dass, falls Polymere **SP2** und **SP3** gleichzeitig im der Zusammensetzung vorhanden sind, das Gewichtsverhältnis von Polymer **SP2** zu Polymer **SP3** einen Wert von > 1.1, insbesondere von > 1.5, aufweist.

Die gestrichelten Linien stellen in den Formeln dieses Dokumentes jeweils die Anbindung einer Gruppe zum Polymer dar.

Es ist besonders einerseits bevorzugt, wenn X^{1'} und/oder X² für NH steht oder andererseits bevorzugt, wenn X^{2'} für NR⁵ steht.

In einer besonders bevorzugten Ausführungsform steht X^{2'} für 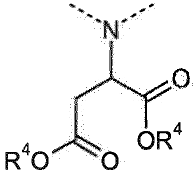 wobei R⁴ für Methyl, Ethyl, Propyl oder Butyl steht.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Mit dem Begriff "Silan" werden im vorliegenden Dokument Organoalkoxysilane bezeichnet, das heisst Verbindungen, in denen zum einen mindestens eine, üblicherweise zwei oder drei Alkoxygruppen direkt an das Silizium-Atom gebunden sind (über eine Si-O-Bindung), und die zum anderen mindestens einen direkt an das Silizium-Atom (über eine Si-C-Bindung) gebundenen organischen Rest aufweisen. Entsprechend dazu bezeichnet der Begriff "Silangruppe" die an den organischen Rest eines Organoalkoxysilans gebundene Silizium-haltige Gruppe. Die Silane, beziehungsweise deren Silangruppen, haben die Eigenschaft, bei Kontakt mit Feuchtigkeit zu hydrolysieren. Dabei bilden sich Organosilanole, das heisst Silizium-organische Verbindungen enthaltend eine oder mehrere Silanolgruppen (Si-OH-Gruppen) und, durch nachfolgende Kondensationsreaktionen, Organosiloxane, das heisst Silizium-organische Verbindungen enthaltend eine oder mehrere Siloxangruppen (Si-O-Si-Gruppen). Der Begriff "silanfunktionell" bezeichnet Verbindungen, insbesondere Polymere, die Silangruppen aufweisen.

Als "α-funktionell" werden Silane oder Silangruppen bezeichnet, deren organischer Rest in α-Stellung (1-Stellung) zum Siliziumatom mit einer funktionellen Gruppe, beispielsweise einer Isocyanat-Gruppe oder einer AminoGruppe, substituiert ist. Entsprechend dazu werden Silane oder Silangruppen als "γ-funktionell" bezeichnet, wenn ihr organischer Rest in γ-Stellung (3-Stellung) zum Siliziumatom mit einer funktionellen Gruppe substituiert ist.

Silanbezeichnungen mit funktionellen Gruppen als Präfixen, wie beispielsweise "Aminosilan" oder "Isocyanatosilan", bezeichnen Silane, welche die genannte funktionelle Gruppe am organischen Rest als Substituenten tragen. Bezeichnungen wie beispielsweise "α-Aminosilan" oder "γ-Aminosilan" bedeuten an, dass eine genannte funktionelle Gruppe in spezifischer Stellung zum Silicumatom steht.

Der Begriff "Polyurethanpolymer" umfasst sämtliche Polymere, welche nach dem Diisocyanat-Polyadditions-Verfahren hergestellt werden. Dies schliesst auch solche Polymere ein, die nahezu oder gänzlich frei von Urethangruppen sind. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate oder Polycarbodiimide.

Die Zusammensetzung muss zwingend mindestens ein Polymer **SP1** mit Endgruppen der Formel (I) aufweisen. Geeignete Polymere **SP1** sind beispielsweise in WO 03/018658 beschrieben und deren Offenbarung wird hiermit eingeschlossen. Diese Polymere enthalten als Endgruppen α-funktionelle Silangruppen, die aufgrund ihrer elektronischen Struktur die Eigenschaft haben, sehr schnell zu hydrolysieren und weiter zu kondensieren. Dadurch weisen solche Polymere eine sehr hohe Reaktivität gegenüber Feuchtigkeit auf. Sie können deshalb zur Herstellung von feuchtigkeitshärtenden Zusammensetzungen eingesetzt werden, die auch ohne oder mit nur geringen Mengen an Katalysatoren, insbesondere Metallkatalysatoren, hohe Aushärtungsgeschwindigkeiten aufweisen.

Sie lassen sich grundsätzlich auf verschiedene Arten herstellen.

In einer ersten Variante (***Var.I***) der Herstellung von Polymer **SP1** werden α-Silane, welche eine NCO-reaktive Gruppe aufweisen, mit einem NCO-Gruppen aufweisenden Polymer reagiert. Insbesondere lassen sich so Polymere der Formel (IV a) bilden:

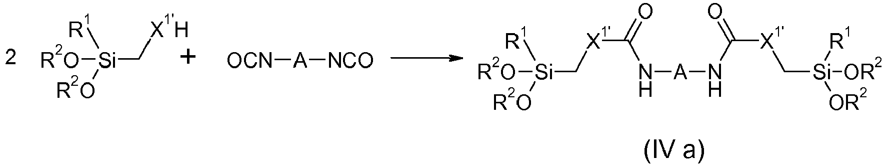

Hierbei stellt A einen zweiwertigen Rest eines Isocyanatgruppen aufweisenden Polymeren nach Entfernung von zwei NCO-Gruppen dar.

α-Silane, welche eine NCO-reaktive Gruppe aufweisen, sind α-Amino-, oder α-Mercaptosilane.

Als α-Aminosilane zur Umsetzung mit einem Isocyanatgruppen enthaltenden Polymer geeignet sind insbesondere α-Aminosilane mit einer primären Aminogruppe (NH₂-Gruppe), im folgenden auch "primäre α-Aminosilane" genannt, wie (Aminomethyl)methyldimethoxysilan; α-Aminosilane mit einer sekundären Aminogruppe (NH-Gruppe), im folgenden auch "sekundäre α-Aminosilane" genannt, beispielsweise Analoga des genannten primären α-Aminosilanes, welche am Stickstoffatom einen Kohlenwasserstoffrest, beispielsweise eine Methyl-, Ethyl-, Butyl-, Cyclohexyl- oder Phenylgruppe, tragen, wie beispielsweise (N-Cyclohexylaminomethyl)methyldimethoxysilan, oder (N-Phenylaminomethyl)methyldimethoxysilan; mehrfach silanfunktionelle sekundäre α-Aminosilane wie beispielsweise Bis(methyldimethoxysilylmethyl)amin; sowie die Produkte aus der Michael-artigen Addition der genannten primären α-Aminosilane an Michaelakzeptoren wie Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd; sowie die Analoga aller genannten α-Aminosilane mit Ethoxy- oder Isopropoxygruppen anstelle der Methoxygruppen am Siliziumatom.

Von den genannten Produkten aus einer Michael-artigen Addition sollen insbesondere die Umsetzungsprodukte aus primären α-Aminosilanen mit Maleinsäuredimethyl-, -diethyl- oder -dibutylester, Acrylsäuretetrahydrofurfuryl-, -isobornyl-, -hexyl-, -lauryl-, -stearyl-, 2-hydroxyethyl- oder 3-hydroxypropylester, Phosphonsäuredimethyl-, -diethyl- oder -dibutylester, Acrylnitril, 2-Pentennitril, Fumaronitril oder β-Nitrostyrol erwähnt werden.

Als α-Mercaptosilane zur Umsetzung mit einem Isocyanatgruppen enthaltenden Polymer geeignet sind beispielsweise (Mercaptomethyl)methyldimethoxysilan, (Mercaptomethyl)ethyldimethoxysilan, oder (Mercaptomethyl)-butyldimethoxysilan, sowie deren Analoga mit Ethoxy- oder Isopropoxygruppen anstelle der Methoxygruppen am Siliziumatom.

In einer zweiten Variante (***Var.II***) der Herstellung von Polymer **SP1** werden α-Silane, welche NCO-Gruppen aufweisen, mit Polymeren, welche NCO-reaktive Gruppen aufweisen reagiert. Insbesondere lassen sich so Polymere der Formel (IV b) bilden:

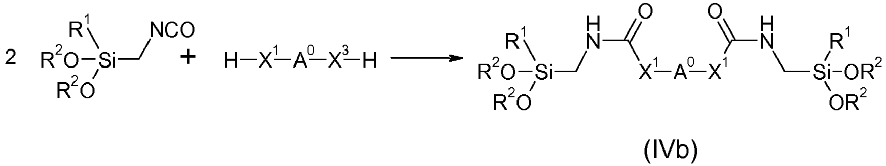

Hierbei stellt A⁰ einen zweiwertigen Rest eines Isocyanatgruppen-reaktiven Polymeren nach Entfernung von zwei NCO-reaktiven Gruppen HX¹ dar.

Als α-Silane, welche NCO-Gruppen aufweisen, sind insbesondere α-Isocyanatosilane geeignet, wie beispielsweise (Isocyanatomethyl)methyldimethoxysilan, (Isocyanatomethyl)ethyldimethoxysilan oder (Isocyanatomethyl)-butyldimethoxysilan, sowie deren Analoga mit Ethoxygruppen oder Isopropoxygruppen anstelle der Methoxygruppen am Siliziumatom. Unter den α-Isocyanatosilanen bevorzugt sind (Isocyanatomethyl)methyldimethoxysilan und (Isocyanatomethyl)methyldiethoxysilan.

Es ist dem Fachmann klar, dass in beiden Varianten (***Var**. **I*** und ***Var**.**II***) das jeweilige Silan stöchiometrisch, bzw. leicht überstöchiometrisch, eingesetzt werden sollte, um eine möglichst hohe Ausbeute am gewünschten Produkt der Formel (IV a) oder (IV b) zu erzielen.

Besonders bevorzugt als Polymere **SP1** sind Polymere der Formel (IV)

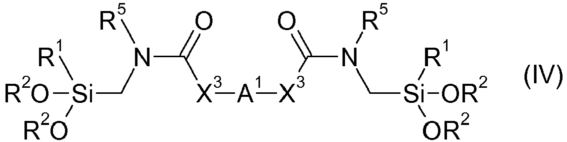

Hierbei steht X³ für O oder NH oder NR^{5'} steht, wobei R^{5'} für einen linearen oder verzweigten Kohlenwasserstoffrest mit 1 bis 20 C-Atomen steht.

Weiterhin steht R² für eine Alkylgruppe mit 1 bis 5 C-Atomen, insbesondere für eine Methylgruppe oder für eine Ethylgruppe oder für eine Isopropylgruppe, und A¹ steht für einen zweiwertigen Rest eines polymeren Diols oder polymeren Diamins nach Entfernung der Hydroxylgruppen oder Aminogruppen.

R¹ und R⁵ wurden bereits vorgängig definiert.

Polymere der Formel (IV) lassen sich je nach der Bedeutung der Reste R⁵ und X³ nach dem Verfahren (***Var**. **I***) oder (***Var.II***) herstellen.

Die vorgängig erwähnten Reste A, A⁰ und A¹ sind von verschiedenartiger Natur. Sie können beispielsweise aus NCO-, bzw. X¹H-, bzw. X³H-funktionellen Kohlenwasserstoffen, wie beispielsweise aus entsprechend funktionalisierten Polybutadienen oder voll- oder teilweise hydrierten Polybutadienen, oder NCO-, bzw. X¹H-, bzw. X³H-funktionellen Polyacrylaten oder NCO-, bzw. X¹H-, bzw. X³H-funktionellen Polyurethanpolymeren oder NCO-, bzw. X¹H-, bzw. X³H-funktionellen Polyoxyalkylenpolymeren stammen.

In einer bevorzugten Ausführungsform ist das dem Rest A¹ zugrunde liegende polymere Diol oder polymere Diamin ein Isocyanatgruppen enthaltendes Polyurethanpolymer **P1**.

Das Isocyanatgruppen enthaltende Polyurethanpolymer **P1** ist beispielsweise erhältlich durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Als Polyole für die Herstellung eines Isocyanatgruppen enthaltenden Polyurethanpolymers **P1** können beispielsweise die folgenden handelsüblichen Polyole, oder beliebige Mischungen davon, eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol und Polyethylenglykole, die isomeren Dipropylenglykole, Tripropylenglykole und Polypropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxypropylendiole oder Polyoxypropylentriole.
   Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 4'000 - 25'000 g/mol. Der Begriff "Molekulargewicht" bezeichnet im vorliegenden Dokument das Molekulargewichtsmittel Mₙ.
   Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden.
- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar® CTBN von Hanse Chemie) hergestellt werden können.

Diese genannten Polyole weisen ein mittleres Molekulargewicht von 250 - 30'000 g/mol, insbesondere von 1'000 - 30'000 g/mol, und eine mittlere OH-Funktionalität im Bereich von 1.6 bis 3 auf.

Als Polyole bevorzugt sind Polyoxyalkylenpolyole. Als Polyole weiterhin bevorzugt sind Diole. Besonders bevorzugt sind Polyoxyalkylendiole, insbesondere solche mit einem Ungesättigtheitsgrad tiefer als 0.02 mEq/g und einem Molekulargewicht im Bereich von 4'000 - 30'000 g/mol, insbesondere 8'000 - 30'000 g/mol.

Als Polyisocyanate für die Herstellung eines Isocyanatgruppen enthaltenden Polyurethanpolymers **P1** können beispielsweise die folgenden handelsüblichen Polyisocyanate verwendet werden:
1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (= Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

Meist bevorzugt als Polymer **SP1** sind Polymere mit den Endgruppen der Formel (IV), bei denen das dem Rest A¹ zugrunde liegende polymere Diol oder polymere Diamin ein Polyoxyalkylendiol, insbesondere ein Polyoxyalkylendiol mit einem Ungesättigtheitsgrad tiefer als 0.02 mEq/g, bevorzugt mit einem Molekulargewicht zwischen 4'000 und 30'000, insbesondere zwischen 8'000 und 30'000 g/mol, ist. Besonders geeignete Polyoxyalkylendiole, die einen niedrigen Ungesättigtheitsgrad aufweisen (gemessen nach ASTM D-2849-69 und angegeben in Milliequivalent Ungesättigtheit pro Gramm Polyol (mEq/g)) lassen sich beispielsweise mit Hilfe von sogenannten Double Metal Cyanide Complex-Katalysatoren (DMC-Katalysatoren) herstellen, wie sie beispielsweise unter dem Handelsnamen Acclaim® von Bayer vertrieben werden.

Als polymeres Diamin sind insbesondere Ethergruppen-haltige aliphatische Diamine, beispielsweise 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin und höhere Oligomere dieser Diamine, Bis-(3-aminopropyl)polytetrahydrofurane und andere Polytetrahydrofurandiamine mit Molekulargewichten im Bereich von beispielsweise 350 bis 5200, sowie Polyoxyalkylen-Diamine. Letztere stellen typischerweise Produkte aus der Aminierung von Polyoxyalkylen-Diolen dar und sind beispielsweise erhältlich unter dem Namen Jeffamine® (von Huntsman Chemicals), unter dem Namen Polyetheramin (von BASF) oder unter dem Namen PC Amine® (von Nitroil). Insbesondere geeignete polymere Diamine sind Polyoxyalkylen-Diamine, wie Jeffamine® D-230, Jeffamine® D-400, Jeffamine® D-2000, Jeffamine® D-4000, Jeffamine® XTJ-511, Jeffamine® ED-600, Jeffamine® ED-900, Jeffamine® ED-2003, Jeffamine® XTJ-568, Jeffamine® XTJ-569, Jeffamine® XTJ-523, Jeffamine® XTJ-536, Jeffamine® XTJ-542, Jeffamine® XTJ-559; Polyetheramin D 230, Polyetheramin D 400 und Polyetheramin D 2000, PC Amine® DA 250, PC Amine® DA 400, PC Amine® DA 650 und PC Amine® DA 2000.

Die feuchtigkeitshärtende Zusammensetzung enthält mindestens ein Polymer **SP2** mit den Endgruppen der Formel (II) und/oder ein Polymer **SP3** mit den Endgruppen der Formel der Formel (III). Die Polymere **SP2** lassen sich auf verschiedene Art und Weisen herstellen:

In einer ersten Variante (***Var.I'***) der Herstellung von Polymer **SP2** werden entsprechende Silane, insbesondere γ-Silane, welche eine NCO-reaktive Gruppe aufweisen, mit einem NCO-Gruppen aufweisenden Polymer reagiert. Insbesondere lassen sich so Polymere der Formel (V) bilden:

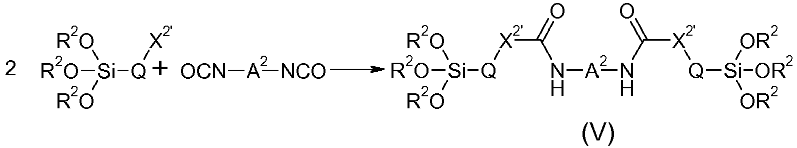

Hierbei stellt A² einen zweiwertigen Rest eines Isocyanatgruppen aufweisendes Polymer, welches herstellbar ist aus der Reaktion von mindestens einem Diisocyanat mit mindestens einem Diamin und/oder Diol, nach Entfernung der Isocyanatgruppen, dar. Die Reste R² und X^{2'} sind bereits vorgängig definiert worden.

γ-Silane, welche eine NCO-reaktive Gruppe aufweisen, sind γ-Amino- oder γ-Mercaptosilane.

Als γ-Aminosilane zur Umsetzung mit einem Isocyanatgruppen enthaltenden Polymer geeignet sind insbesondere
- γ-Aminosilane mit einer primären Aminogruppe (NH₂-Gruppe), im folgenden auch "primäre γ-Aminosilane" genannt, wie 3-Aminopropyltrimethoxysilan, 3-amino-2-methyl-propyltrimethoxysilan und, 3-Amino-2,2-dimethyl-propyltrimethoxysilan,
- γ-Aminosilane mit einer sekundären Aminogruppe (NH-Gruppe), im folgenden auch "sekundäre γ-Aminosilane" genannt, beispielsweise Analoga der genannten primären γ-Aminosilane, welche am Stickstoffatom einen Kohlenwasserstoffrest, beispielsweise eine Methyl-, Ethyl-, Butyl-, Cyclohexyl- oder Phenylgruppe, tragen, wie beispielsweise (N-Cyclohexylaminopropyl)trimethoxysilan, oder (N-Phenylaminopropyl)-trimethoxysilan; mehrfach silanfunktionelle sekundäre α-Aminosilane wie beispielsweise Bis(trimethoxysilylpropyl)amin.
- sowie die Produkte aus der Michael-artigen Addition der genannten primären γ-Aminosilane an Michaelakzeptoren wie Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd; sowie die Analoga aller genannten γ-Aminosilane mit Ethoxy- oder Isopropoxygruppen anstelle der Methoxygruppen am Siliziumatom.

Von den genannten Produkten aus einer Michael-artigen Addition sollen insbesondere die Umsetzungsprodukte aus primären γ-Aminosilanen mit Maleinsäuredimethyl-, -diethyl- oder -dibutylester, Acrylsäuretetrahydrofurfuryl-, -isobornyl-, -hexyl-, -lauryl-, -stearyl-, 2-hydroxyethyl- oder 3-hydroxypropylester, Phosphonsäuredimethyl-, -diethyl- oder -dibutylester, Acrylnitril, 2-Pentennitril, Fumaronitril oder β-Nitrostyrol erwähnt werden.

Als γ-Mercaptosilane zur Umsetzung mit einem Isocyanatgruppen enthaltenden Polymer geeignet sind beispielsweise (3-Mercaptopropyl)trimethoxysilan, sowie deren Analoga mit Ethoxy- oder Isopropoxygruppen anstelle der Methoxygruppen am Siliziumatom.

Weitere besonders geeignete Aminosilane sind beispielsweise 4-Amino-3,3-dimethyl-butyl-trimethoxysilan und 4-Amino-3-methyl-butyl-trimethoxysilan, deren Alkylierungsprodukte, die Produkte aus der Michael-artigen Addition dieser primären Aminosilane an Michaelakzeptoren wie Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd; sowie die Analoga aller genannten Aminosilane mit Ethoxy- oder Isopropoxygruppen anstelle der Methoxygruppen am Siliziumatom.

In einer zweiten Variante (***Var.II***) der Herstellung von Polymer **SP2** werden entsprechende Silane, insbesondere γ-Silane, welche NCO-Gruppen aufweisen, mit Polymeren, welche NCO-reaktive Gruppen aufweisen reagiert. Insbesondere lassen sich so Polymere der Formel (V b) bilden:

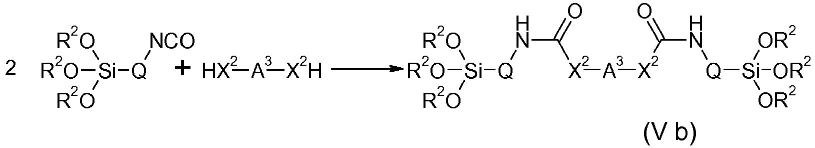

Hierbei stellt A³ einen zweiwertigen Rest eines Polymeren mit NCO-reaktiven Gruppen nach Entfernung von NCO-reaktiven Gruppen HX² dar.

Als γ-Silane, welche NCO-Gruppen aufweisen, sind insbesondere γ-Isocyanatosilane geeignet, wie beispielsweise (Isocyanatopropyl)-trimethoxysilan, (Isocyanatopropyl)triethoxysilan, sowie deren Analoga mit Isopropoxygruppen anstelle der Methoxygruppen am Siliziumatom.

In Formel (II), (V) und (V b) steht der Rest Q vorzugsweise für einen Rest, welcher ausgewählt ist aus der Gruppe bestehend aus 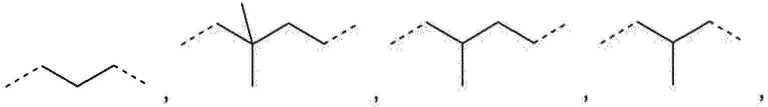 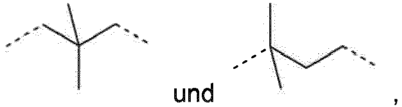 meist bevorzugt für 1,3-Propylen.

Die feuchtigkeitshärtende Zusammensetzung enthält mindestens ein Polymer **SP2** mit den Endgruppen der Formel (II) und gegebenenfalls ein Polymer **SP3** mit den Endgruppen der Formel (III), welches frei von Harnstoffgruppen oder Urethangruppen ist. Das Polymer **SP3** mit Endgruppen der Formel (III) ist insbesondere durch Hydrosilylierung von Polymeren mit endständigen Doppelbindungen herstellbar, beispielsweise von Poly(meth)acrylatpolymeren oder Polyetherpolymeren mit endständigen Doppelbindungen, insbesondere von allylterminierten Polyoxyalkylenpolymeren. Derartige Polymere **SP3** sind beispielsweise in US 3,971,751 und US 6,207,766 beschrieben und deren Offenbarung wird hiermit eingeschlossen. Polymere **SP3** sind dem Fachmann insbesondere unter der Bezeichnung "MS-Polymere" bekannt. Beispiele für kommerziell verfügbare Polymere **SP3** mit Endgruppen der Formel (III) sind die Produkte mit den Handelsnamen MS-Polymer® S203(H), S303(H), S227, S810, MA903 und S943, Silyl® SAX220, SAX350, SAX400 und SAX725, Silyl® SAT350 und SAT400, sowie XMAP® SA100S und SA310S (alle von Kaneka); sowie Excestar® S2410, S2420, S3430, S3630, W2450 und MSX931 (alle von Asahi Glass).

Die Zusammensetzung muss mindestens ein Polymer **SP1** mit den Endgruppen der Formel (I) enthalten. Weiterhin muss die Zusammensetzung mindestens ein Polymer **SP2** mit den Endgruppen der Formel (II) und gegebenfalls mindestens ein Polymer **SP3** mit den Endgruppen der Formel (III) enthalten.

In einer Ausführungsform der Erfindung beinhaltet die Zusammensetzung mindestens ein Polymer **SP1** mit den Endgruppen der Formel (I) und mindestens ein Polymer **SP2** mit den Endgruppen der Formel (II). Insbesondere weisen derartige Zusammensetzung keine Polymer **SP3** mit den Endgruppen der Formel (III) auf.

In einer weiteren Ausführungsform der Erfindung beinhaltet die Zusammensetzung mindestens ein Polymer **SP1** mit den Endgruppen der Formel (I) und mindestens ein Polymer **SP2** mit den Endgruppen der Formel (II) und mindestens ein Polymer **SP3** mit den Endgruppen der Formel (III).

Besonders bevorzugt werden Zusammensetzungen, welche mindestens ein Polymer **SP2** mit den Endgruppen der Formel (II) aufweisen.

Meist bevorzugt sind Zusammensetzungen, welche als feuchtigkeitshärtende Polymere lediglich mindestens ein Polymer **SP1** mit den Endgruppen der Formel (I) und mindestens ein Polymer **SP2** mit den Endgruppen der Formel (II) enthalten. Derartige Zusammensetzungen sind insbesondere frei von Polymeren **SP3** mit Endgruppen der Formel (III).

Das Gewichtsverhältnis von Polymer **SP1** zu Polymer **SP2** beträgt einen Wert zwischen 0.35 und 0.8.

Das Gewichtsverhältnis von Polymer **SP1** zu Polymer **SP3** beträgt einen Wert zwischen 0.1 und 0.8, insbesondere zwischen 0.2 und 0.8.

Sind die Gewichtsverhältnisse **SP1/SP2** grösser als 0.8, weist die Zusammensetzung eine verstärkte Tendenz zum Kriechen unter Belastung auf, welche mit steigendem Anteil an Polymer **SP1** zunimmt. Es zeigte sich, dass die obere Grenze für dieses Verhältnis in der Praxis bei 0.8 liegt. Ist dieses Verhältnis kleiner als 0.1, wird die Haftung stark verschlechtert. Es hat sich gezeigt, dass ein Verhältnis **SP1/SP2** bzw. **SP1/SP3** zwischen 0.2 und 0.8 besonders gute Ausgewogenheit der Eigenschaften der Zusammensetzung ergibt. Optimalerweise liegt dieses Verhältnis zwischen 0.3 und 0.6, insbesondere zwischen 0.35 und 0.5. Weiterhin hat sich gezeigt, dass bei einem Gewichtsverhältnis **SP1/SP2** bzw. **SP1/SP3** von mehr als 0.8, insbesondere von mehr als 1, derartige Systems aufgrund der sehr hohen Reaktivität von Polymer **SP1** tendenziell zu schnell reagieren, was sich dann wiederum in einer reduzierten Lagerstabilität auswirken kann.

Falls die Zusammensetzung gleichzeitig sowohl Polymer **SP2** als auch Polymer **SP3** enthält, weist das Gewichtsverhältnis von Polymer **SP2** zu Polymer **SP3** einen Wert von > 1.1, insbesondere von > 1.5, auf.

Es wurde gefunden, dass, falls eine Kombination von sowohl Polymer **SP2** als auch Polymer **SP3** verwendet wird, ein zu hoher Anteil an Polymer **SP3** sich negativ auf das Kriechverhalten auswirkt. Es hat sich nun gezeigt, dass für den Fall der gleichzeitigen Anwesenheit von **SP2** und **SP3** mindestens ein Verhältnis von **SP2/SP3** eingehalten werden muss, um das Kriechen in für die Praxis akzeptablen Rahmen zu halten.

Weiterhin beträgt der Anteil des Polymers **SP1** mit den Endgruppen der Formel (I) in der Zusammensetzung vorzugsweise 2 - 45 Gew.-%, insbesondere 5 - 35 Gew.-%.

Weiterhin beträgt die Summe des Anteils des Polymers **SP2** und des Polymers **SP3** in der Zusammensetzung vorzugsweise 10 - 70 Gew.-%.

Die Zusammensetzung kann bei Bedarf weitere Bestandteile enthalten.
- Weichmacher, beispielsweise Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene;
- Lösemittel;
- anorganische und organische Füllstoffe, zum Beispiel gemahlene oder gefällte Calciumcarbonate, welche gegebenenfalls mit Stearaten beschichtet sind, insbesondere feinteiliges beschichtetes Calciumcarbonat, Russe, insbesondere industriell hergestellte Russe (im Folgenden als "Russ" bezeichnet), Kaoline, Aluminiumoxide, Kieselsäuren, insbesondere hochdisperse Kieselsäuren aus Pyrolyseprozessen, PVC-Pulver oder Hohlkugeln. Bevorzugte Füllstoffe sind Russ, Calciumcarbonate, insbesondere feinteilige beschichtete Calciumcarbonate, hochdisperse Kieselsäuren aus Pyrolyseprozessen, sowie Kombinationen aus diesen Füllstoffen.
- Fasern, beispielsweise aus Polyethylen;
- Pigmente; beispielsweise Titandioxid;
- Katalysatoren, beispielsweise Metallkatalysatoren in Form von Organozinnverbindungen wie Dibutylzinndilaurat und Dibutylzinndiacetylacetonat, Bismut-organische Verbindungen oder Bismut-Komplexe;
   Titanate, wie z.B. Isopropyltriisostearoyltitanat, isopropyltri(dodecyl)benzolsulfonyltitanat, Isopropyltri(N-ethylendiamino)ethyltitanat, Titan-diethylacetoacetat, und Kombinationen verschiedener Metallkatalysatoren; Aminogruppenhaltige Verbindungen, beispielsweise 1,4-Diazabicyclo[2.2.2]-octan und 2,2'-Dimorpholinodiethylether,
   sowie deren Kombinationen;
- Rheologie-Modifizierer, wie beispielsweise Verdickungsmittel, zum Beispiel Harnstoffverbindungen, Polyamidwachse, Bentonite oder pyrogene Kieselsäuren;
- Haftvermittler, insbesondere Aminosilane, vorzugsweise ein Aminosilan ausgewählt aus der Gruppe bestehend aus
   3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyl-dimethoxymethylsilan, sowie deren Analoga mit Ethoxy- oder Isopropoxygruppen anstelle der Methoxygruppen am Silizium;
   N-(2-Aminoethyl)-3-aminopropyl-silane wie N-(2-Aminoethyl)-3-aminopropyl-trimethoxysilan, N-(2-Aminoethyl)-3-aminopropyl-methyldime-thoxysilan, N-(2-Aminoethyl)-3-aminopropyl-triethoxysilan und N-(2-Aminoethyl)-3-aminopropyl-triisopropoxysilan;
   N-(2-Aminoethyl)-N'-[3-(trimethoxysilyl)propyl]ethylendiamin;
   N-Butyl-3-aminopropyltrimethoxysilan, N-Phenyl-3-aminopropyl-trimethoxysilan;
   Adduktionsprodukte aus der Michael-artigen Addition von primären Aminosilanen insbesondere von 3-Aminopropyl-trimethoxysilan oder 3-Aminopropyl-dimethoxymethylsilan, an Michael-Akzeptoren wie Acrylnitril, Acryl- und Methacrylsäureestern, Acryl- oder Methacrylsäureamiden, Maleinsäure- und Fumarsäurediestern, Citraconsäurediestern und Itaconsäurediestern, bevorzugt N-(3-Trimethoxysilyl-propyl)-amino-bernsteinsäuredimethyl- und -diethylester;
- weitere Haftvermittler, beispielsweise Epoxysilane, (Meth)acrylsilane, bevorzugt (3-Methacryloxypropyl)trimethoxysilan, (3-Methacryloxypropyl)triethoxysilan oder (3-Methacryloxypropyl)triisopropoxysilan, Anhydridosilane, bevorzugt 3-(Trimethoxysilyl)propylbernsteinsäureanhydrid oder 3-(Triethoxysilyl)propylbernsteinsäureanhydrid, insbesondere 3-(Triethoxysilyl)propylbern-steinsäureanhydrid, oder Addukte von Epoxysilane, (Meth)acrylsilane, Anhydridosilanen und primären Aminosilanen, sowie Harnstoffsilane;
- Vernetzer, beispielsweise silanfunktionelle Oligo- und Polymere;
- Trocknungsmittel, zum Beispiel Vinyltrimethoxysilan, α-funktionelle Silane wie N-(Silylmethyl)-O-methyl-carbamat, insbesondere N-(Methyldimethoxy-silylmethyl)-O-methyl-carbamat, (Methacryloxymethyl)silan, Methoxymethylsilan, N-Phenyl-, N-Cyclohexyl- und N-Alkylsilan, Orthoameisensäureester, Calciumoxid oder Molekularsiebe;
- Stabilisatoren gegen Wärme, Licht- und UV-Strahlung;
- flammhemmende Substanzen;
- oberflächenaktive Substanzen, wie beispielsweise Netzmittel, Verlaufsmittel, Entlüftungsmittel oder Entschäumer;
- Biozide, wie beispielsweise Algizide, Fungizide oder das Pilzwachstum hemmende Substanzen;
sowie weitere üblicherweise in feuchtigkeitshärtenden Zusammensetzungen eingesetzte Substanzen.

Die Zusammensetzung enthält vorzugsweise keine freien Isocyanatgruppen. Eine derartige isocyanatfreie Zusammensetzung ist vom toxikologischen Standpunkt her vorteilhaft.

Es ist vorteilhaft, darauf zu achten, dass diese weiteren Bestandteile die Lagerstabilität der Zusammensetzung nicht beeinträchtigen, das heisst, dass sie während der Lagerung die zur Vernetzung führende Reaktion der in der Zusammensetzung enthaltenen Silangruppen nicht in signifikantem Ausmass auslösen dürfen. Insbesondere bedeutet dies, dass solche weiteren Komponenten bevorzugt kein oder höchstens Spuren von Wasser enthalten. Es kann sinnvoll sein, gewisse Komponenten vor dem Einmischen in die Zusammensetzung chemisch oder physikalisch zu trocknen.

Besonders bevorzugt umfasst die Zusammensetzung neben dem Polymer **SP1** und Polymer **SP2** und/oder Polymer **SP3** weiterhin
20 - 50 Gew.-% an Füllstoff, bevorzugt ausgewählt aus der Gruppe umfassend Kreide, Russ und pyrogene Kieselsäure, meist bevorzugt Mischungen von Kreide und/oder Russ und/oder pyrogener Kieselsäure,
0.1 - 10 Gew.-% an Organosilan,
0.01 - 2 Gew.-% an Katalysator, insbesondere an Zinn-Katalysator, und
0 - 20 Gew.-% an Weichmacher, insbesondere Phthalate.

Als Organosilane sind insbesondere die vorgängig als Haftvermittler genannten Aminosilane, Epoxysilane, (Meth)acrylsilane, Anhydridosilane, Addukte von Epoxysilanen, (Meth)acrylsilanen, Anhydridosilanen und primären Aminosilanen, Harnstoffsilane sowie als Trocknungsmittel genannten Silane zu verstehen.

Die beschriebene feuchtigkeitshärtende Zusammensetzung wird unter Ausschluss von Feuchtigkeit aufbewahrt. Sie ist lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität, der Auspressmenge oder der Auspresskraft ermittelt.

Bei der Applikation der beschriebenen feuchtigkeitshärtenden Zusammensetzung auf mindestens einen Festkörper oder Artikel kommen die Silangruppen des Polymers und der Silane in Kontakt mit Feuchtigkeit. Die Silangruppen haben die Eigenschaft, bei Kontakt mit Feuchtigkeit zu hydrolysieren. Dabei bilden sich Organosilanole (Silizium-organische Verbindungen enthaltend eine oder mehrere Silanolgruppen, Si-OH-Gruppen) und, durch nachfolgende Kondensationsreaktionen, Organosiloxane (Silizium-organische Verbindungen enthaltend eine oder mehrere Siloxangruppen, Si-O-Si-Gruppen). Als Ergebnis dieser Reaktionen, welche durch den Einsatz von Katalysatoren beschleunigt werden können, härtet die Zusammensetzung schliesslich aus; dieser Prozess wird auch als Vernetzung bezeichnet. Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die beschriebene Zusammensetzung härtet bei Kontakt mit Feuchtigkeit schnell aus. Sie verfügt im ausgehärteten Zustand über eine hohe mechanische Festigkeit und gutes Kriechverhalten. Weiterhin bauen sich Haftung und Festigkeit sehr schnell auf.

Somit stellen ausgehärtete Zusammensetzungen, welche durch die Reaktion einer vorgängig beschriebenen feuchtigkeitshärtenden Zusammensetzung und Wasser, insbesondere in Form von Luftfeuchtigkeit oder durch Zumischung einer Wasser aufweisenden Paste, erhalten werden, einen weiteren Aspekt der vorliegenden Erfindung dar.

Die vorgängig beschriebenen feuchtigkeitshärtenden Zusammensetzungen finden insbesondere als Klebstoff, Dichtstoff, Vergussmasse oder Beschichtung Verwendung.

Geeignete Anwendungen sind beispielsweise das Verkleben von Bauteilen im Hoch- oder Tiefbau und bei der Fertigung oder Reparatur von industriellen Gütern oder Konsumgütern, insbesondere von Fenstern, Haushaltmaschinen oder Transportmitteln, wie Fahrzeugen zu Wasser oder zu Lande, bevorzugt Automobile, Busse, Lastkraftwagen, Züge oder Schiffe; das Abdichten von Fugen, Nähten oder Hohlräumen in der industriellen Fertigung oder Reparatur, oder im Hoch- oder Tiefbau; sowie das Beschichten von diversen Substraten, beispielsweise als Anstrich, Lack, Primer, Versiegelung oder Schutzbeschichtung, oder als Bodenbelag, beispielsweise für Büros, Wohnbereiche, Spitäler, Schulen, Lagerhallen und Parkgaragen.

Ein Verfahren zum Verkleben von einem Substrat **S1** mit einem Substrat **S2** umfasst die folgenden Schritte
i) Applikation einer vorgängig beschriebenen feuchtigkeitshärtenden Zusammensetzung auf ein Substrat **S1**;
ii) Kontaktieren der applizierten Zusammensetzung mit einem Substrat **S2** innerhalb der Offenzeit der Zusammensetzung;
oder
i') Applikation einer vorgängig beschriebenen feuchtigkeitshärtenden Zusammensetzung auf ein Substrat **S1** und auf ein Substrat **S2**;
ii') Kontaktieren der applizierten Zusammensetzung miteinander innerhalb der Offenzeit der Zusammensetzung.

Das Substrat **S2** besteht hierbei aus dem gleichen oder einem unterschiedlichen Material wie das Substrat **S1**.

Ein Verfahren zum Abdichten umfasst den Schritt
i") Applikation einer vorgängig beschriebenen feuchtigkeitshärtenden Zusammensetzung in eine Fuge, welche durch die Oberflächen oder einen Teil der Oberflächen von Substrat **S1** und Substrate **S2** gebildet wird, wobei das Substrat **S2** aus dem gleichen oder einem unterschiedlichen Material wie das Substrat **S1** besteht oder wobei das Substrat **S1** und Substrat **S2** ein Stück bilden.

Die Applikation des Kleb- oder Dichtstoffes erfolgt vorzugsweise gleichmässig.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farben und Lacke, insbesondere Automobildecklacke.

Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Unter Benutzung eines, oben beschriebenen, Verfahrens zum Verkleben oder eines, oben beschriebenen, Verfahrens zum Abdichten wird ein verklebter oder abgedichteter Artikel erhalten. Ein derartiger Artikel kann ein Bauwerk, insbesondere ein Bauwerk des Hoch- oder Tiefbaus, oder ein Transportmittel oder ein Anbauteil eines Transportmittels oder ein Artikel der Möbel-, Textil- oder Verpackungsindustrie sein.

Bevorzugt ist der Artikel ein Transportmittel, beispielsweise ein Fahrzeug zu Wasser oder zu Lande, insbesondere ein Automobil, ein Bus, ein Lastkraftwagen, ein Zug oder ein Schiff, oder ein Anbauteil davon. Besonders bevorzugt ist der verklebte oder abgedichtete Artikel ein Transportmittel, insbesondere ein Automobil, Bus, Zug oder Lastkraftwagen, oder ein Anbauteil eines Transportmittels, insbesondere eines Automobils.

Falls die Zusammensetzung als Klebstoff für elastische Verklebungen im Fahrzeugbau verwendet wird, weist sie bevorzugt eine pastöse Konsistenz mit strukturviskosen Eigenschaften auf. Ein solcher Klebstoff wird mittels einer geeigneten Vorrichtung auf das Substrat aufgetragen, bevorzugt in Form einer Raupe, wobei diese eine im Wesentlichen runde oder dreieckige Querschnittsfläche aufweisen kann. Geeignete Methoden zum Auftragen des Klebstoffes sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Ein Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Elastische Verklebungen im Fahrzeugbau sind beispielsweise das Ankleben von Teilen, wie Kunststoffabdeckungen, Zierleisten, Flansche, Stosstangen, Führerkabinen oder andere Anbauteile, an die lackierte Karosserie eines Transportmittels, oder das Einkleben von Scheiben in die Karosserie. Als Fahrzeuge genannt werden sollen beispielsweise Automobile, Lastkraftwagen, Busse, Schienenfahrzeuge und Schiffe.

### Beispiele

### Prüfmethoden

Um das **Kriechverhalten** zu untersuchen, wird eine einfach überlappte Zugscherprobe mit den Klebstoffen und Aluminiumblechen (mit Isopropanol gereinigt) hergestellt (Klebfläche: 25x12 mm, Dicke 4mm). Nach dem vollständigen Aushärten, wird die Probe entweder mit 0.1 MPa, oder mit 3.5% der maximalen Zugscher-Kraft bei 23°C und 50 % r.h. (relative Luftfeuchtigkeit) belastet. Die Verformung der Probe wird während 300h mittels einer mechanischen Messuhr aufgezeichnet und in Tabelle 1 als prozentuale Änderung des Messwertes zum Messbeginn angegeben. Eine hohe %-Angabe entspricht somit einem starken Kriechen.

Zur Bestimmung der **Frühhaftung** wird eine Glasplatte mit Isopropanol gereinigt. Dann wird eine Klebstoffraupe (ca. 1.5 cm breit, 0.5 cm hoch) aufgetragen. Nach 4 und 8 Stunden wird die Haftung der sich bis dahin gebildeten Haut wie folgt geprüft: die angehärteten Raupen wurden jeweils an einem Ende knapp über der Oberfläche des Plättchens (Klebefläche) eingeschnitten. Das eingeschnittene Ende der Raupe wurde von Hand festgehalten und dann vorsichtig und langsam, schälend in Richtung des anderen Raupenendes, von der Plättchenoberfläche gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Oberfläche des Plättchens angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe vom Plättchen gezogen bzw. geschnitten. Die Bewertung der Hafteigenschaften erfolgte anhand von der ausgehärteten Zusammensetzung, die nach dem Abziehen der Raupe auf der Substratoberfläche zurückgeblieben war (Kohäsionsbruch), und zwar durch Abschätzen des kohäsiven Anteils der Haftfläche. In den Testresultaten in Tabelle 1 ist der Anteil Kohäsionsbruch in Prozenten der gesamten Klebefläche des bereits ausgehärteten Materials angegeben. Ein hoher Anteil Kohäsivbruch entspricht somit hoher Frühhaftung.

Die **Zugfestigkeit** und **Dehnung** wurde mittels Hantel-Zugversuche gemäss DIN 53 504, die Zugscherfestigkeit gemäss DIN EN 1465 bestimmt.

Zur Messung der **Hautbildungszeit** (Zeit bis zur Klebefreiheit, "tackfree time") wurden einige Gramm der Zusammensetzung in einer Schichtdicke von ca. 2 mm auf Pappkarton aufgetragen und im Normklima (23±1 °C und 50±5% relative Luftfeuchtigkeit) die Zeit bestimmt, die es dauerte, bis beim leichten Antippen der Oberfläche der Zusammensetzung mittels einer Pipette aus LDPE erstmals keine Rückstände auf der Pipette mehr zurückblieben.

### Polymere

### Polymere 1

- Geniosil® STP-E10 ("*STP-E10*")
- Geniosil® STP-E30 (*"STP-E30"*)

Beide Polymere sind silanterminierter Polyether mit Dimethoxy(methyl)silylmethylcarbamat Endgruppen und sind erhältlich bei Wacker Chemie AG, München, Deutschland.

### Polymer 2

Unter Stickstoffatmosphäre wurden 1000g Polyol Acclaim® 12200 (Bayer AG; low monol Polyoxypropylendiol; OH-Zahl 11.0 mg KOH/g; Wassergehalt ca. 0.02 Gewichts-%), 43.6 g Isophorondiisocyanat (IPDI; Vestanat® IPDI, Evonik Degussa), 126.4 g Diisodecylphthalat (DIDP; Palatinol® Z, BASF) und 0.12 g Di-n-butyl-zinndilaurat unter stetigem Rühren auf 90°C aufgeheizt und auf dieser Temperatur belassen, bis der titrimetrisch bestimmte Gehalt an freien Isocyanatgruppen einen Wert von 0.63 Gewichts-% erreicht hatte. Anschliessend wurden 62.3 g N-(3-Trimethoxysilyl-propyl)-amino-bernsteinsäure-diethylester eingemischt und die Mischung während 4 Stunden bei 90°C gerührt, bis kein freies Isocyanat mittels IR-Spektroskopie mehr nachgewiesen wurde. Das Produkt (*"Polymer 2"*) wurde auf Raumtemperatur abgekühlt und unter Ausschluss von Feuchtigkeit aufbewahrt (theoretischer Polymergehalt = 89.7%). Der hierfür verwendete N-(3-Trimethoxysilyl-propyl)-amino-bersteinsäure-diethylester wurde wie folgt hergestellt: 51.0 g 3-Aminopropyl-trimethoxysilan (Silquest® A-1110, Momentive) wurden vorgelegt. Unter gutem Rühren wurden bei Raumtemperatur langsam 49.0 g Maleinsäure-diethylester (Fluka) zugegeben und die Mischung während 8 Stunden bei Raumtemperatur gerührt.

### Herstellung der Klebstoffe

In einem Vakuummischer wurden die in Tabelle angegebenen Gewichtsteile Polymer 1, d.h. *STP-E10* oder *STP-E30,* und Polymer 2, Diisodecylphthalat (DIDP; Palatinol® Z, BASF), Dimethoxymethylsilylmethy)-O-methylcarbamat, feinteilige beschichtete Kreide (Socal® U1S2, Solvay, getrocknet), Russ (getrocknet bei 130°C), N-(2-aminoethyl)(3-aminopropyl)-trimethoxysilan und Di-n-butyl-Zinndilaurat (DBTDL) zu einer homogenen Paste verarbeitet, welche unter Ausschluss von Feuchtigkeit aufbewahrt wurde.

**Tabelle 1. Zusammensetzungen (in Gewichtsteilen) und Resultate.**

| | | ***Ref.1*** | ***Ref.2*** | ***1*** | ***Ref.3*** | ***Ref.4*** | ***Ref.5*** | ***Ref.6*** |
|---|---|---|---|---|---|---|---|---|
| ***SP1*** | Geniosil® STP-E30 | | 7.5 | 15 | 50 | | | |
| | Geniosil® STP-E10 | | | | | 7.5 | 42.5 | 50 |
| ***SP2*** | *Polymer 2* | 50 | 42.5 | 35 | | 42.5 | 7.5 | |
| DIDP | | 18 | 18 | 18 | 18 | 18 | 18 | 18 |
| Trocknungsmittel^{a} | | 1 | 1 | 1 | 1 | 1 | 1 | 1 |
| Socal U1S2 | | 15 | 15 | 15 | 15 | 15 | 15 | 15 |
| Russ | | 15 | 15 | 15 | 15 | 15 | 15 | 15 |
| Haftvermittler^{b} | | 1 | 1 | 1 | 1 | 1 | 1 | 1 |
| DBTDL | | 0.15 | 0.13 | 0.11 | 0.0063 | 0.13 | 0.028 | 0.0063 |
| Zugfestigkeit [MPa] | | 5.0 | 4.9 | 5.3 | 6.9 | 5.3 | 5.5 | 5.8 |
| Dehnung [%] | | 417 | 415 | 461 | 629 | 450 | 462 | 522 |
| Zugscherfestigkeit [MPa] | | 4.8 | 4.6 | 3.9 | 2.6 | 4.0 | 4.1 | 4.0 |
| Hautbildungszeit [min] | | 70 | 47 | 18 | 29 | 38 | 36 | 32 |
| Frühhaftung 4h [%] | | 10 | 10 | 10 | 90 | 10 | 75 | 50 |
| Frühhaftung 8h [%] | | 20 | 50 | 70 | 75 | 60 | 60 | 50 |
| Kriechen (300h) Belastung mit: | | | | | | | | |
| 3.5% der Zugscherfestigkeit[%] | | 26 | 75 | 67 | 50h bis Bruch | 34 | 103 | 104 |
| 0.1 MPa [%] | | 16 | 20 | 25 | 175 | 11 | 20 | 30 |

| | | | | | | | | |
|---|---|---|---|---|---|---|---|---|
| ^{a} Dimethoxymethylsilylmethyl-O-methylcarbamat ^{b} N-(2-aminoethyl)(3-aminopropyl)-trimethoxysilan | | | | | | | | |

Das Beispiel ***1*** zeigt ein gutes Kriechverhalten und einen schnellen Haftungsaufbau.

## Patentansprüche

1. Feuchtigkeitshärtende Zusammensetzung umfassend mindestens ein Polymer **SP1** mit Endgruppen der Formel (I) 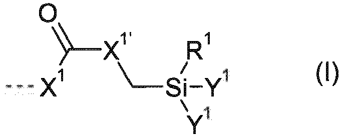 sowie
mindestens ein Polymer **SP2** mit Endgruppen der Formel (II) und gegebenenfalls mindestens ein Polymer **SP3** mit den Endgruppen der Formel (III), welches frei von Harnstoffgruppen oder Urethangruppen ist; 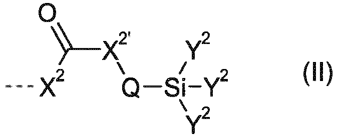 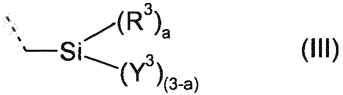 wobei
X¹,X^{1'},X² und X^{2'} jeweils unabhängig voneinander für O, S oder NR⁵ stehen, wobei R⁵ für ein Wasserstoffatom oder für einen linearen oder verzweigten Kohlenwasserstoffrest mit 1 bis 20 C-Atomen steht, welcher gegebenenfalls cyclische Anteile aufweist, und welcher gegebenenfalls mindestens eine funktionelle Gruppe aufweist, welche ausgewählt ist aus der Gruppe bestehend aus Alkoxysilyl, Ether, Sulfon, Nitril, Nitro, Carbonsäureester, Sulfonsäureester und Phosphonsäureester;
R¹ und R³ jeweils unabhängig voneinander für eine Alkylgruppe mit 1 bis 10 C-Atomen steht;
Y¹, Y² und Y³ jeweils unabhängig voneinander für einen hydrolysierbaren Rest, insbesondere für eine Alkoxygruppe mit 1 bis 3 C-Atomen, stehen;
Q für einen linearen oder verzweigten Alkylenrest mit 3 bis 6 C-Atomen steht;
a für 0 oder 1 steht; und die gestrichelten Linien jeweils die Anbindung einer Gruppe zum Polymer darstellt;
mit der Massgabe, dass
entweder
das Gewichtsverhältnis von Polymer **SP1** zu Polymer **SP2** einen Wert zwischen 0.35 und 0.8 beträgt
oder
das Gewichtsverhältnis von Polymer **SP1** zu Polymer **SP3** einen Wert zwischen 0.1 und 0.8, insbesondere zwischen 0.2 und 0.8, beträgt;
sowie dass, falls Polymere **SP2** und **SP3** gleichzeitig im der Zusammensetzung vorhanden sind, das Gewichtsverhältnis von Polymer **SP2** zu Polymer **SP3** einen Wert von > 1.1, insbesondere von > 1.5, aufweist.

2. Feuchtigkeitshärtende Zusammensetzung gemäss Anspruch 1, **dadurch gekennzeichnet, dass** X^{1'} und/oder X² für NH steht.

3. Feuchtigkeitshärtende Zusammensetzung gemäss Anspruch 1 oder 2, **dadurch gekennzeichnet, dass** X^{2'} für NR⁵ steht.

4. Feuchtigkeitshärtende Zusammensetzung gemäss einem der vorhergehenden Ansprüche, **dadurch gekennzeichnet, dass** das Polymer **SP1** die Formel (IV) aufweist 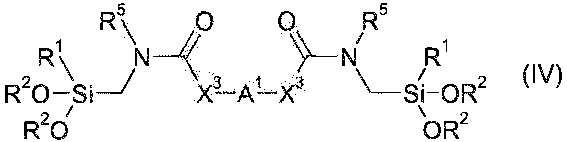 wobei
X³ für O oder NH oder NR^{5'} steht, wobei R^{5'} für einen linearen oder verzweigten Kohlenwasserstoffrest mit 1 bis 20 C-Atomen steht,
R² für eine Alkylgruppe mit 1 bis 5 C-Atomen, insbesondere für eine Methylgruppe oder für eine Ethylgruppe oder für eine Isopropylgruppe, steht;
und A¹ für einen zweiwertigen Rest eines polymeren Diols oder polymeren Diamins nach Entfernung der Hydroxylgruppen oder Aminogruppen steht.

5. Feuchtigkeitshärtende Zusammensetzung gemäss einem der vorhergehenden Ansprüche, **dadurch gekennzeichnet, dass** das Polymer **SP2** die Formel (V) aufweist 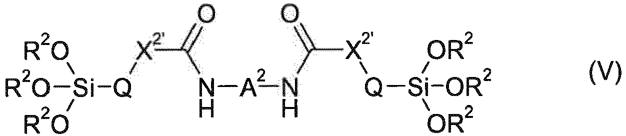 wobei
X^{2'} für O oder S oder NR⁵ steht
R² für eine Alkylgruppe mit 1 bis 5 C-Atomen, insbesondere für eine Methylgruppe oder für eine Ethylgruppe oder für eine Isopropylgruppe, steht;
Q für einen linearen oder verzweigten Alkylenresten mit 3 bis 6 C-Atomen steht;
und A² für einen zweiwertigen Rest eines Isocyanatgruppen aufweisenden Polymers, welches herstellbar ist aus der Reaktion von mindestens einem Diisocyanat mit mindestens einem Diamin und/oder Diol, nach Entfernung der Isocyanatgruppen, steht.

6. Feuchtigkeitshärtende Zusammensetzung gemäss einem der vorhergehenden Ansprüche, **dadurch gekennzeichnet, dass** der Rest Q für einen Rest steht, welcher ausgewählt ist aus der Gruppe bestehend aus 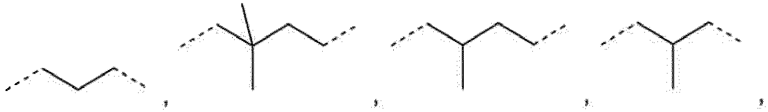 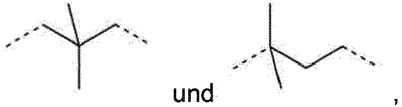 bevorzugt für 1,3-Propylen.

7. Feuchtigkeitshärtende Zusammensetzung gemäss einem der vorhergehenden Ansprüche, **dadurch gekennzeichnet, dass** das Polymer **SP3** mit den Endgruppen der Formel (III) durch Hydrosilylierung von Polymeren mit endständigen Doppelbindungen herstellbar ist.

8. Feuchtigkeitshärtende Zusammensetzung gemäss einem der vorhergehenden Ansprüche, **dadurch gekennzeichnet, dass** die Zusammensetzung lediglich mindestens ein Polymer **SP1** mit den Endgruppen der Formel (I) und mindestens ein Polymer **SP2** mit den Endgruppen der Formel (II) als feuchtigkeitshärtende Polymere enthält.

9. Feuchtigkeitshärtende Zusammensetzung gemäss einem der vorhergehenden Ansprüche, **dadurch gekennzeichnet, dass** der Anteil des Polymers **SP1** mit den Endgruppen der Formel (I) in der Zusammensetzung 2 - 45 Gew.-%, insbesondere 5 - 35 Gew.-%, beträgt.

10. Feuchtigkeitshärtende Zusammensetzung gemäss einem der vorhergehenden Ansprüche, **dadurch gekennzeichnet, dass** die Summe des Anteils des Polymers **SP2** und des Polymers **SP3** in der Zusammensetzung 10 - 70 Gew.-% beträgt.

11. Feuchtigkeitshärtende Zusammensetzung gemäss einem der vorhergehenden Ansprüche, **dadurch gekennzeichnet, dass** die Zusammensetzung weiterhin umfasst
20 - 50 Gew.-% an Füllstoff, bevorzugt ausgewählt aus der Gruppe umfassend Kreide, Russ und pyrogene Kieselsäure, meist bevorzugt Mischungen von Kreide und/oder Russ und/oder pyrogener Kieselsäure,
0.1 - 10 Gew.-% an Organosilan,
0.01 - 2 Gew.-% an Katalysator, insbesondere an Zinn-Katalysator, und
0 - 20 Gew.-% an Weichmacher, insbesondere Phthalate.

12. Feuchtigkeitshärtende Zusammensetzung gemäß einem der Ansprüche 1 bis 11, **dadurch gekennzeichnet, dass** das Gewichtsverhältnis von Polymer **SP1** zu Polymer **SP3** einen Wert zwischen 0.35 und 0.8 beträgt.

13. Ausgehärtete Zusammensetzung erhalten durch die Reaktion einer feuchtigkeitshärtenden Zusammensetzung gemäss einem der Ansprüche 1 bis 11 und Wasser, insbesondere in Form von Luftfeuchtigkeit oder durch Zumischung einer Wasser aufweisenden Paste.

14. Verwendung einer feuchtigkeitshärtenden Zusammensetzung gemäss einem der Ansprüche 1 bis 11 als Klebstoff, Dichtstoff, Vergussmasse oder Beschichtung.

15. Verfahren zum Verkleben von einem Substrat **S1** mit einem Substrat **S2**, umfassend die Schritte
i) Applikation einer feuchtigkeitshärtenden Zusammensetzung gemäss einem der Ansprüche 1 bis 11 auf ein Substrat **S1**;
ii) Kontaktieren der applizierten Zusammensetzung mit einem Substrat **S2** innerhalb der Offenzeit der Zusammensetzung;
oder
i') Applikation einer feuchtigkeitshärtenden Zusammensetzung gemäss einem der Ansprüche 1 bis 11 auf ein Substrat **S1** und auf ein Substrat **S2**;
ii') Kontaktieren der applizierten Zusammensetzung miteinander innerhalb der Offenzeit der Zusammensetzung;
wobei das Substrat **S2** aus dem gleichen oder einem unterschiedlichen Material wie das Substrat **S1** besteht.

16. Verfahren zum Abdichten umfassend den Schritt
i") Applikation einer feuchtigkeitshärtenden Zusammensetzung gemäss einem der Ansprüche 1 bis 11 in eine Fuge, welche durch die Oberflächen oder einen Teil der Oberflächen von Substrat **S1** und Substrate **S2** gebildet wird, wobei das Substrat **S2** aus dem gleichen oder einem unterschiedlichen Material wie das Substrat **S1** besteht oder wobei das Substrat **S1** und Substrat **S2** ein Stück bilden.

17. Artikel, welcher unter Benutzung eines Verfahrens gemäss Anspruch 15 oder 16 erhalten wurde.

## Claims

1. Moisture-curing composition comprising
at least one polymer **SP1** having end groups of the formula (I) 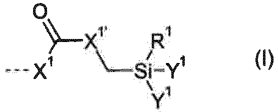 and also
at least one polymer **SP2** having end groups of the formula (II)
and optionally at least one polymer **SP3** having the end groups of the formula (III) and being free from urea groups or urethane groups; 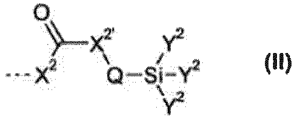 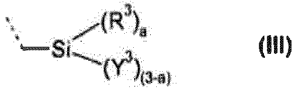
where
X¹, X^{1'}, X² and X^{2'} each independently of one another are O, S or NR⁵, where R⁵ is a hydrogen atom or is a linear or branched hydrocarbyl radical having 1 to 20 carbon atoms and optionally comprising cyclic fractions, and which optionally comprises at least one functional group selected from the group consisting of alkoxysilyl, ether, sulfone, nitrile, nitro, carboxylic acid ester, sulfonic acid ester and phosphonic acid ester;
R¹ and R³ each independently of one another are an alkyl group having 1 to 10 carbon atoms;
Y¹, Y² and Y³ each independently of one another are a hydrolysable radical, more particularly an alkoxy group having 1 to 3 carbon atoms;
Q is a linear or branched alkylene radical having 3 to 6 carbon atoms;
a is 0 or 1; and the dashed lines each represent the attachment of a group to the polymer;
with the proviso that
either
the weight ratio of polymer **SP1** to polymer **SP2** is between 0.35 and 0.8
or
the weight ratio of polymer **SP1** to polymer **SP3** is between 0.1 and 0.8, more particularly between 0.2 and 0.8;
and that if polymers **SP2** and **SP3** are present simultaneously in the composition, the weight ratio of polymer **SP2** to polymer **SP3** is > 1.1, more particularly > 1.5.

2. Moisture-curing composition according to Claim 1, **characterized in that** X^{1'} and/or X² are/is NH.

3. Moisture-curing composition according to Claim 1 or 2, **characterized in that** X^{2'} is NR⁵.

4. Moisture-curing composition according to any of the preceding claims, **characterized in that** the polymer **SP1** has the formula (IV) 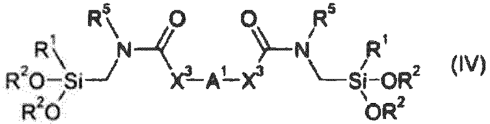 where
X³ is O or NH or NR^{5'}, where R^{5'} is a linear or branched hydrocarbon radical having 1 to 20 carbon atoms,
R² is an alkyl group having 1 to 5 carbon atoms, more particularly a methyl group or an ethyl group or an isopropyl group;
and A¹ is a divalent radical of a polymeric diol or polymeric diamine after removal of the hydroxyl groups or amino groups.

5. Moisture-curing composition according to any of the preceding claims, **characterized in that** the polymer **SP2** has the formula (V) 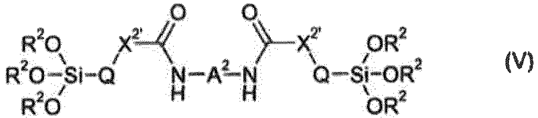 where
X^{2'} is O or S or NR⁵,
R² is an alkyl group having 1 to 5 carbon atoms, more particularly a methyl group or an ethyl group or an isopropyl group;
Q is a linear or branched alkylene radical having 3 to 6 carbon atoms;
and A² is a divalent radical of a polymer which contains isocyanate groups and which is preparable from the reaction of at least one diisocyanate of at least one diamine and/or diol, after removal of the isocyanate groups.

6. Moisture-curing composition according to any of the preceding claims, **characterized in that** the radical Q is a radical which is selected from the group consisting of 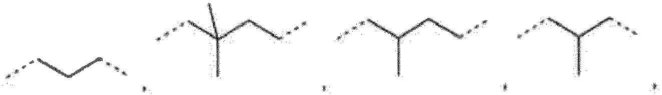 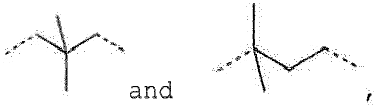 preferably being 1,3-propylene.

7. Moisture-curing composition according to any of the preceding claims, **characterized in that** the polymer **SP3** having the end groups of the formula (III) is preparable by hydrosilylation of polymers having terminal double bonds.

8. Moisture-curing composition according to any of the preceding claims, **characterized in that** the composition comprises only at least one polymer **SP1** having the end groups of formula (I) and at least one polymer **SP2** having the end groups of formula (II) as moisture-curing polymers.

9. Moisture-curing composition according to any of the preceding claims, **characterized in that** the fraction of the polymer **SP1** having the end groups of the formula (I) in the composition is 2 - 45 wt%, more particularly 5 - 35 wt%.

10. Moisture-curing composition according to any of the preceding claims, **characterized in that** the sum of the fraction of the polymer **SP2** and of the polymer **SP3** in the composition is 10 - 70 wt%.

11. Moisture-curing composition according to any of the preceding claims, **characterized in that** the composition further comprises
20 - 50 wt% of filler, preferably selected from the group encompassing chalk, carbon black and fumed silica, most preferably mixtures of chalk and/or carbon black and/or fumed silica,
0.1 - 10 wt% of organosilane,
0.01 - 2 wt% of catalyst, more particularly of tin catalyst, and
0 - 20 wt% of plasticizer, more particularly phthalates.

12. Moisture-curing composition according to any of Claims 1 to 11, **characterized in that** the weight ratio of polymer **SP1** to polymer **SP3** is between 0.35 and 0.8.

13. Cured composition obtained by reacting a moisture-curing composition according to any of Claims 1 to 11 and water, more particularly in the form of atmospheric moisture or by admixing of a water-comprising paste.

14. Use of a moisture-curing composition according to any of Claims 1 to 11 as adhesive, sealant, grout or coating.

15. Method for adhesively bonding a substrate **S1** to a substrate **S2,** comprising the steps of
i) applying a moisture-curing composition according to any of Claims 1 to 11 to a substrate **S1**;
ii) contacting the applied composition with a substrate **S2** within the open time of the composition;
or
i') applying a moisture-curing composition according to any of Claims 1 to 11 to a substrate **S1** and to a substrate **S2**;
ii') contacting the applied composition with one another within the open time of the composition;
where the substrate **S2** consists of the same material as or a different material from the substrate **S1.**

16. Method for sealing, comprising the step of
i") applying a moisture-curing composition according to any of Claims 1 to 11 into a joint formed by the surfaces or part of the surfaces of substrate **S1** and substrate **S2**, where the substrate **S2** consists of the same material as or a different material from the substrate **S1** or where the substrate **S1** and substrate **S2** form one piece.

17. Article obtained using a method according to Claim 15 or 16.

## Revendications

1. Composition durcissant à l'humidité, comprenant :
au moins un polymère **SP1** contenant des groupes terminaux de formule (I) 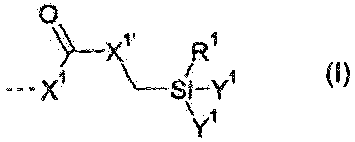 et
au moins un polymère **SP2** contenant des groupes terminaux de formule (II),
et éventuellement au moins un polymère **SP3** contenant des groupes terminaux de formule (III), qui est exempt de groupes urée ou de groupes uréthane ; 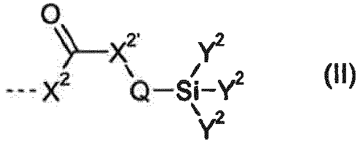 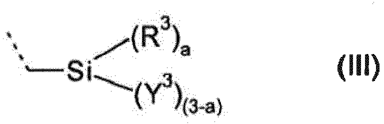
dans lesquelles
X¹, X^{1'}, X² et X^{2'} représentent chacun indépendamment les uns des autres O, S ou NR⁵,
R⁵ représentant un atome d'hydrogène ou un radical hydrocarboné linéaire ou ramifié de 1 à 20 atomes C, qui comprend éventuellement des fractions cycliques, et qui comprend éventuellement au moins un groupe fonctionnel qui est choisi dans le groupe constitué par alcoxysilyle, éther, sulfone, nitrile, nitro, ester d'acide carboxylique, ester d'acide sulfonique et ester d'acide phosphonique ;
R¹ et R³ représentent chacun indépendamment l'un de l'autre un groupe alkyle de 1 à 10 atomes C ;
Y¹, Y² et Y³ représentent chacun indépendamment les uns des autres un radical hydrolysable, notamment un groupe alcoxy de 1 à 3 atomes C ;
Q représente un radical alkylène linéaire ou ramifié de 3 à 6 atomes C ;
a représente 0 ou 1 ; et les lignes en pointillés représentent à chaque fois la liaison d'un groupe au polymère ;
à condition que
soit
le rapport en poids entre le polymère **SP1** et le polymère **SP2** ait une valeur comprise entre 0,35 et 0,8,
soit
le rapport en poids entre le polymère **SP1** et le polymère **SP3** ait une valeur comprise entre 0,1 et 0,8, notamment entre 0,2 et 0,8 ;
et que, lorsque les polymères **SP2** et **SP3** sont présents simultanément dans la composition, le rapport en poids entre le polymère **SP2** et le polymère **SP3** présente une valeur > 1,1, notamment > 1,5.

2. Composition durcissant à l'humidité selon la revendication 1, **caractérisée en ce que** X^{1'} et/ou X² représentent NH.

3. Composition durcissant à l'humidité selon la revendication 1 ou 2, **caractérisée en ce que** X^{2'} représente NR⁵.

4. Composition durcissant à l'humidité selon l'une quelconque des revendications précédentes, **caractérisée en ce que** le polymère **SP1** présente la formule (IV) 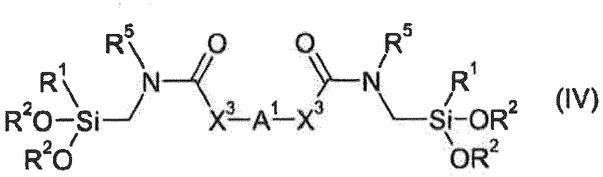 dans laquelle
X³ représente O ou NH ou NR^{5'}, R^{5'} représentant un radical hydrocarboné linéaire ou ramifié de 1 à 20 atomes C,
R² représente un groupe alkyle de 1 à 5 atomes C, notamment un groupe méthyle ou un groupe éthyle ou un groupe isopropyle ;
et A¹ représente un radical bivalent d'un diol polymère ou d'une diamine polymère après l'élimination des groupes hydroxyle ou des groupes amino.

5. Composition durcissant à l'humidité selon l'une quelconque des revendications précédentes, **caractérisée en ce que** le polymère **SP2** présente la formule (V) 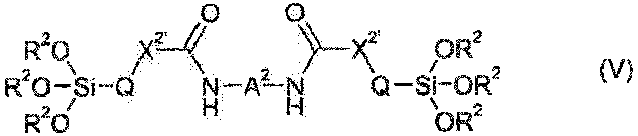 dans laquelle
X^{2'} représente O ou S ou NR⁵,
R² représente un groupe alkyle de 1 à 5 atomes C, notamment un groupe méthyle ou un groupe éthyle ou un groupe isopropyle ;
Q représente un radical alkylène linéaire ou ramifié de 3 à 6 atomes C ;
et A² représente un radical bivalent d'un polymère comprenant des groupes isocyanate, qui peut être fabriqué par la réaction d'au moins un diisocyanate avec au moins une diamine et/ou un diol, après l'élimination des groupes isocyanate.

6. Composition durcissant à l'humidité selon l'une quelconque des revendications précédentes, **caractérisée en ce que** le radical Q représente un radical qui est choisi dans le groupe constitué par : 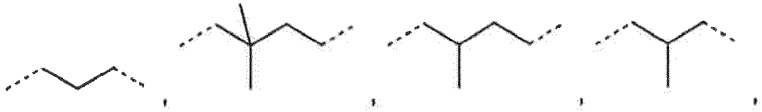 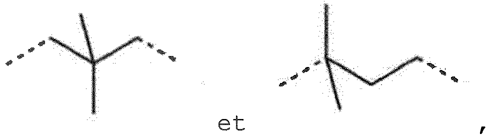 de préférence 1,3-propylène.

7. Composition durcissant à l'humidité selon l'une quelconque des revendications précédentes, **caractérisée en ce que** le polymère **SP3** contenant les groupes terminaux de formule (III) peut être fabriqué par hydrosilylation de polymères contenant des doubles liaisons terminales.

8. Composition durcissant à l'humidité selon l'une quelconque des revendications précédentes, **caractérisée en ce que** la composition contient uniquement au moins un polymère **SP1** contenant les groupes terminaux de formule (I) et au moins un polymère **SP2** contenant les groupes terminaux de formule (II) en tant que polymères durcissant à l'humidité.

9. Composition durcissant à l'humidité selon l'une quelconque des revendications précédentes, **caractérisée en ce que** la proportion du polymère **SP1** contenant les groupes terminaux de formule (I) dans la composition est de 2 à 45 % en poids, notamment de 5 à 35 % en poids.

10. Composition durcissant à l'humidité selon l'une quelconque des revendications précédentes, **caractérisée en ce que** la somme de la proportion du polymère **SP2** et du polymère **SP3** dans la composition est de 10 à 70 % en poids.

11. Composition durcissant à l'humidité selon l'une quelconque des revendications précédentes, **caractérisée en ce que** la composition comprend en outre :
20 à 50 % en poids d'une charge, de préférence choisie dans le groupe comprenant la craie, le noir de carbone et la silice pyrogénée, de manière préférée entre toutes des mélanges de craie et/ou de noir de carbone et/ou de silice pyrogénée,
0,1 à 10 % en poids d'un organosilane,
0,01 à 2 % en poids d'un catalyseur, notamment d'un catalyseur à base d'étain, et
0 à 20 % en poids de plastifiants, notamment de phtalates.

12. Composition durcissant à l'humidité selon l'une quelconque des revendications 1 à 11, **caractérisée en ce que** le rapport en poids entre le polymère **SP1** et le polymère **SP3** a une valeur comprise entre 0,35 et 0,8.

13. Composition durcie obtenue par la réaction d'une composition durcissant à l'humidité selon l'une quelconque des revendications 1 à 11 et d'eau, notamment sous la forme d'humidité de l'air ou par incorporation d'une pâte comprenant de l'eau.

14. Utilisation d'une composition durcissant à l'humidité selon l'une quelconque des revendications 1 à 11 en tant qu'adhésif, matériau d'étanchéité, matériau de scellement ou revêtement.

15. Procédé de collage d'un substrat **S1** avec un substrat **S2,** comprenant les étapes suivantes :
i) l'application d'une composition durcissant à l'humidité selon l'une quelconque des revendications 1 à 11 sur un substrat **S1** ;
ii) la mise en contact de la composition appliquée avec un substrat **S2** pendant le temps d'ouverture de la composition ;
ou
i') l'application d'une composition durcissant à l'humidité selon l'une quelconque des revendications 1 à 11 sur un substrat **S1** et sur un substrat **S2** ;
ii') la mise en contact de la composition appliquée l'une avec l'autre pendant le temps d'ouverture de la composition ;
le substrat **S2** étant constitué par un matériau identique ou différent de celui du substrat **S1.**

16. Procédé d'étanchéification, comprenant l'étape suivante :
i") l'application d'une composition durcissant à l'humidité selon l'une quelconque des revendications 1 à 11 dans un joint qui est formé par les surfaces ou une partie des surfaces d'un substrat **S1** et d'un substrat **S2**, le substrat **S2** tant constitué par un matériau identique ou différent de celui du substrat **S1** ou le substrat **S1** et le substrat **S2** formant une pièce.

17. Article, qui a été obtenu en utilisant un procédé selon la revendication 15 ou 16.
